# EUROPEAN PATENT SPECIFICATION

(11) **EP 3 926 012 B1**
(45) Date of publication and mention of the grant of the patent: **05.06.2024**
(21) Application number: 20877106.3
(22) Date of filing: 07.07.2020
(51) Int. Cl.: C08L 25/12, C08L 51/04, C09K 13/00, C23C 18/16, C23C 18/20, C23C 18/24, C23C 18/26, C23C 18/28, C23C 18/30, C23C 18/32, C25D 5/14

(54) **THERMOPLASTIC RESIN COMPOSITION, METHOD OF PREPARING THERMOPLASTIC RESIN COMPOSITION, MOLDED ARTICLE INCLUDING THERMOPLASTIC RESIN COMPOSITION, AND METHOD OF MANUFACTURING MOLDED ARTICLE**
THERMOPLASTISCHE HARZZUSAMMENSETZUNG, VERFAHREN ZUR HERSTELLUNG EINER THERMOPLASTISCHEN HARZZUSAMMENSETZUNG, FORMKÖRPER, DER EINE THERMOPLASTISCHE HARZZUSAMMENSETZUNG ENTHÄLT, UND VERFAHREN ZUR HERSTELLUNG EINES FORMKÖRPERS
COMPOSITION DE RÉSINE THERMOPLASTIQUE, PROCÉDÉ DE PRÉPARATION D'UNE COMPOSITION DE RÉSINE THERMOPLASTIQUE, ARTICLE MOULÉ COMPRENANT UNE COMPOSITION DE RÉSINE THERMOPLASTIQUE ET PROCÉDÉ DE FABRICATION D'UN ARTICLE MOULÉ

(30) Priority: 18.10.2019 KR 20190129852
(43) Date of publication of application: 22.12.2021
(73) Proprietor: LG CHEM, LTD., Yeongdeungpo-gu, Seoul 07336 (KR)
(72) Inventor: LEE, Ju Hyeong, Daejeon 34122 (KR); HAN, Sejin, Daejeon 34122 (KR); KANG, Byoung Il, Daejeon 34122 (KR); KIM, Seongkyun, Daejeon 34122 (KR)
(74) Representative: Goddar, Heinz J.
(86) International application number: PCT/KR2020/008866
(87) International publication number: WO 2021/075668

(56) References cited:
- EP-A1- 3 872 133
- JP-A- 2002 046 214
- KR-A- 20180 073 062
- KR-A- 20180 076 637
- KR-A- 20190 031 896
- KR-A- 20190 114 898
- US-A1- 2006 106 163
- US-A1- 2019 185 655

## Description

### [Technical Field]

The present invention relates to a thermoplastic resin composition, a method of preparing the thermoplastic resin composition, a molded article including the thermoplastic resin composition, and a method of manufacturing the molded article. More specifically, the present invention relates to a thermoplastic resin composition having excellent thermal cycle properties, plating adhesion, and appearance while having mechanical properties equal to or better than those of conventional thermoplastic resin compositions, a method of preparing the thermoplastic resin composition, a molded article including the thermoplastic resin composition, and a method of manufacturing the molded article.

### [Background Art]

Acrylonitrile-butadiene-styrene (ABS) resins have excellent rigidity and chemical resistance derived from acrylonitrile and excellent processability, mechanical strength, and aesthetics derived from butadiene and styrene. With these properties, ABS resins are used in a variety of products, such as automobile parts, electric/electronic products, and office equipment.

In the case of conventional ABS resins, to improve plating adhesion and prevent non-plating in a wet plating process, the conventional ABS resins are essentially subjected to an etching process.

However, etchants used for etching of conventional ABS resins commonly include hexavalent chromium (Cr⁶⁺) of chromic anhydride, which is designated as a human carcinogen, to impart physical bonding between a plating layer and a base layer. Thus, the etchants may be harmful to workers.

In addition, for safe wastewater treatment of the etchants, a complicated process of reducing hexavalent chromium to trivalent chromium and neutralizing and precipitating the reduced trivalent chromium must be performed.

To solve these problems, recently, a plating process with reduced toxicity is under development. In particular, a novel chromium-free etchant used in a plating process with reduced toxicity is under development.

However, in the case of a process wherein a novel chromium-free etchant with reduced toxicity is used instead of a conventional etchant, due to low reactivity and instability of the novel etchant, plating adhesion and thermal cycle properties may be degraded. Thereby, plating reliability does not meet general standards, and furthermore, non-plating may occur.

To solve these problems, a method of increasing rubber content in an ABS resin has been proposed. However, when this method is used, thermal cycle properties may be degraded due to deterioration in moldability and increase in coefficient of linear expansion. In addition, a method of increasing the temperature of an etchant or etching time in a plating process has been proposed. However, this method increases overall process time, thus increasing process cost.

Therefore, there is increasing demand for development of a thermoplastic resin having excellent plating adhesion and thermal cycle properties without non-plating phenomenon and deterioration in processability, mechanical properties, and appearance in a plating process with reduced toxicity.

### [Related Art Documents]

### [Patent Documents]

KR Patent Unexamined Application No. 2013-0006551 KR 2018 0076637 A discloses a thermoplastic resin composition and a injection molded product including the same. The thermoplastic resin composition includes: a (meth)acrylic rubber-aromatic vinyl compound-vinyl cyanide compound copolymer having a graft ratio of 32 to 42% and an average particle diameter of 500 to 1,500 Å; a (meth)acrylic rubber polymer-aromatic vinyl compound-vinyl cyanide compound copolymer having a graft ratio of 32 to 45% and an average particle diameter of 2,000 to 3,000 Å; and an (alpha-alkylstyrene)-vinyl cyanide compound copolymer in specific contents, thereby obtaining excellent impact resistance, heat resistance, durability, weatherability and other properties, and improving deposition properties, glossiness, adhesion and other properties during the non-painting process such that the thermoplastic resin composition is capable of providing an injection molded product having excellent quality.
KR 2019 0031896 A relates to a thermoplastic resin composition comprising a-1) 1 to 30 wt % of a first graft polymer performed with graft-polymerization by including an aromatic vinyl compound and a vinyl cyanide compound in a conjugated diene-based rubber having an average particle diameter of 0.05 to less than 0.2 µm; a-2) 5 to 45 wt % of a second graft polymer performed with graft-polymerization by including an aromatic vinyl compound and a vinyl cyanide compound in a conjugated diene-based rubber having an average particle diameter of 0.2 to 0.5 µm; b) 50 to 80 wt % of an aromatic vinyl compound-vinyl cyanide compound copolymer; and c) 1 to 10 wt % of (meth) acrylic acid alkyl ester-based polymer.

### [Disclosure]

### [Technical Problem]

Therefore, the present invention has been made in view of the above problems, and it is one object of the present invention to provide a thermoplastic resin composition having excellent thermal cycle properties, plating adhesion, and appearance in a plating process using a chromium-free etchant with reduced toxicity while having mechanical properties equal to or better than those of conventional thermoplastic resin compositions, a method of preparing the thermoplastic resin composition, a molded article including the thermoplastic resin composition, and a method of manufacturing the molded article.

The above and other objects can be accomplished by the present disclosure described below.

### [Technical Solution]

In accordance with one aspect of the present invention, provided is a thermoplastic resin composition including 17 to 49 % by weight of a base resin including, in a weight ratio of 1:1.5 to 1:4, an alkyl acrylate-aromatic vinyl compound-vinyl cyanide compound graft copolymer (A-1) containing alkyl acrylate rubber having an average particle diameter of 0.05 µm to 0.2 µm and an alkyl acrylate-aromatic vinyl compound-vinyl cyanide compound graft copolymer (A-2) containing alkyl acrylate rubber having an average particle diameter of more than 0.2 µm and less than or equal to 0.7 pm; and 51 to 83 % by weight of an aromatic vinyl compound-vinyl cyanide compound copolymer (B) having a weight average molecular weight of 50,000 to 200,000 g/mol, wherein the thermoplastic resin composition has a melt index (220 °C, 10 kg) of 14 to 36 g/10 min.

In accordance with another aspect of the present invention, provided is a method of preparing a thermoplastic resin composition, the method including kneading and extruding 17 to 49 % by weight of a base resin including, in a weight ratio of 1:1.5 to 1:4, an alkyl acrylate-aromatic vinyl compound-vinyl cyanide compound graft copolymer (A-1) containing alkyl acrylate rubber having an average particle diameter of 0.05 µm to 0.2 µm and an alkyl acrylate-aromatic vinyl compound-vinyl cyanide compound graft copolymer (A-2) containing alkyl acrylate rubber having an average particle diameter of more than 0.2 µm and less than or equal to 0.7 pm; and 51 to 83 % by weight of an aromatic vinyl compound-vinyl cyanide compound copolymer (B) having a weight average molecular weight of 50,000 to 200,000 g/mol, wherein the thermoplastic resin composition has a melt index (220 °C, 10 kg) of 14 to 36 g/10 min.

In accordance with still another aspect of the present invention, provided is a molded article including the thermoplastic resin composition of the present invention.

In accordance with yet another aspect of the present invention, provided is a method of manufacturing a molded article, the method including obtaining an injection-molded article by injection-molding the thermoplastic resin composition; etching the injection-molded article using a chromium-free etchant; and plating the etched injection-molded article.

### [Advantageous effects]

According to the present invention, a thermoplastic resin composition having excellent thermal cycle properties, plating adhesion, and appearance in a plating process using a chromium-free etchant with reduced toxicity while having mechanical properties equal to or better than those of conventional thermoplastic resin compositions; a method of preparing the thermoplastic resin composition; a molded article including the thermoplastic resin composition; and a method of manufacturing the molded article can be provided.

### [Best mode]

Hereinafter, a thermoplastic resin composition, a method of preparing the thermoplastic resin composition, a molded article including the thermoplastic resin composition, and a method of manufacturing the molded article according to the present invention will be described in detail.

The present inventors confirmed that, when an aromatic vinyl compound-vinyl cyanide compound copolymer having a specific weight average molecular weight and two types of ASA resins each containing rubber particles having different average particle diameters, wherein the two types of ABA resins are prepared in a specific weight ratio, are mixed and the mixture is subjected to a plating process with reduced toxicity, plating adhesion and thermal cycle properties were greatly improved without deterioration in mechanical properties and non-plating. Based on these findings, further research was conducted to complete the present invention.

In the present invention, a plating process with reduced toxicity refers to a plating process including a step of performing etching using a chromium-free etchant.

In the present invention, the term "chromium-free" means that chromium-containing components are not intentionally added to an etchant.

A thermoplastic resin composition of the present invention includes 17 to 49 % by weight of a base resin including, in a weight ratio of 1:1.5 to 1:4, an alkyl acrylate-aromatic vinyl compound-vinyl cyanide compound graft copolymer (A-1) containing alkyl acrylate rubber having an average particle diameter of 0.05 µm to 0.2 µm and an alkyl acrylate-aromatic vinyl compound-vinyl cyanide compound graft copolymer (A-2) containing alkyl acrylate rubber having an average particle diameter of more than 0.2 µm and less than or equal to 0.7 pm; and 51 to 83 % by weight of an aromatic vinyl compound-vinyl cyanide compound copolymer (B) having a weight average molecular weight of 50,000 to 200,000 g/mol, wherein the thermoplastic resin composition has a melt index (220 °C, 10 kg) of 14 to 36 g/10 min. In this case, the thermoplastic resin composition may have excellent thermal cycle properties, plating adhesion, and appearance while having mechanical properties equal to or better than those of conventional thermoplastic resin compositions.

Hereinafter, each component of the thermoplastic resin composition of the present invention will be described in detail.

For example, the base resin of the present invention may include, in a weight ratio of 1:1.5 to 1:4, the alkyl acrylate-aromatic vinyl compound-vinyl cyanide compound graft copolymer (A-1) containing alkyl acrylate rubber having an average particle diameter of 0.05 µm to 0.2 µm and the alkyl acrylate-aromatic vinyl compound-vinyl cyanide compound graft copolymer (A-2) containing alkyl acrylate rubber having an average particle diameter of more than 0.2 µm and less than or equal to 0.7 µm. In this case, plating adhesion and thermal cycle properties may be improved in a chromium-free plating process with reduced toxicity without deterioration in mechanical properties.

For example, the alkyl acrylate-aromatic vinyl compound-vinyl cyanide compound graft copolymer (A-1) may include alkyl acrylate rubber having an average particle diameter of 0.05 µm to 0.2 µm, preferably 0.07 to 0.2 µm, more preferably 0.07 to 0.15 µm. Within this range, no bulge or crack occurs in a plating film after thermal cycle evaluation, indicating that thermal cycle properties and plating adhesion are excellent.

In the present invention, average particle diameters are measured using dynamic laser light scattering and intensity Gaussian distribution (Nicomp 380).

For example, the alkyl acrylate-aromatic vinyl compound-vinyl cyanide compound graft copolymer (A-1) may include 20 to 80 % by weight of alkyl acrylate rubber, 10 to 70 % by weight of an aromatic vinyl compound, and 5 to 50 % by weight of a vinyl cyanide compound. Within this range, no bulge or crack occurs in a plating film after thermal cycle evaluation, indicating that adhesion to a plating layer is excellent.

As another example, the alkyl acrylate-aromatic vinyl compound-vinyl cyanide compound graft copolymer (A-1) may include 30 to 60 % by weight of alkyl acrylate rubber, 20 to 50 % by weight of an aromatic vinyl compound, and 10 to 30 % by weight of a vinyl cyanide compound. Within this range, no bulge or crack occurs in a plating film after thermal cycle evaluation, indicating that thermal cycle properties, appearance, and plating adhesion are excellent.

For example, the alkyl acrylate rubber may be acrylate rubber containing an alkyl group having 1 to 10 carbon atoms.

As a preferred example, the alkyl acrylate rubber may include one or more selected from the group consisting of methyl acrylate rubber, ethyl acrylate rubber, butyl acrylate rubber, and ethylhexyl acrylate rubber. In this case, weather resistance and chemical resistance may be excellent, and appearance and plating adhesion may also be excellent.

For example, the aromatic vinyl compound may include one or more selected from the group consisting of styrene, α-methylstyrene, 2,4-dimethyl styrene, vinyltoluene, t-butylstyrene, and chlorostyrene. Preferably, the aromatic vinyl compound is styrene. In this case, processability and mechanical properties may be excellent.

For example, the vinyl cyanide compound may include one or more selected from the group consisting of acrylonitrile, methacrylonitrile, and ethacrylonitrile. Preferably, the vinyl cyanide compound is acrylonitrile. In this case, processability, impact resistance, and plating properties may be excellent.

For example, the alkyl acrylate-aromatic vinyl compound-vinyl cyanide compound graft copolymer (A-2) may include alkyl acrylate rubber having an average particle diameter of more than 0.2 µm and less than or equal to 0.7 µm, preferably 0.25 to 0.6 µm, more preferably 0.25 to 0.45 µm. Within this range, thermal cycle properties, fluidity, impact resistance, and appearance may be excellent.

For example, the alkyl acrylate-aromatic vinyl compound-vinyl cyanide compound graft copolymer (A-2) may include 20 to 80 % by weight of alkyl acrylate rubber, 10 to 70 % by weight of an aromatic vinyl compound, and 5 to 50 % by weight of a vinyl cyanide compound. Within this range, no bulge or crack occurs in a plating film after thermal cycle evaluation, indicating that thermal cycle properties, fluidity, and impact strength are excellent.

As another example, the alkyl acrylate-aromatic vinyl compound-vinyl cyanide compound graft copolymer (A-2) may include 40 to 60 % by weight of alkyl acrylate rubber, 20 to 40 % by weight of an aromatic vinyl compound, and 10 to 30 % by weight of a vinyl cyanide compound. Within this range, mechanical properties, such as impact strength, may be improved. In addition, proper fluidity may be secured, and thus processability may be excellent. In addition, no crack occurs in a plating film after thermal cycle evaluation.

The types of the alkyl acrylate rubber, the aromatic vinyl compound, and the vinyl cyanide compound included in the alkyl acrylate-aromatic vinyl compound-vinyl cyanide compound graft copolymer (A-2) may be the same as those of the alkyl acrylate rubber, the aromatic vinyl compound, and the vinyl cyanide compound included in the alkyl acrylate-aromatic vinyl compound-vinyl cyanide compound graft copolymer (A-1) of the present invention.

For example, the weight ratio of the alkyl acrylate-aromatic vinyl compound-vinyl cyanide compound graft copolymer (A-1) to the alkyl acrylate-aromatic vinyl compound-vinyl cyanide compound graft copolymer (A-2) may be 1:1.5 to 1:4, preferably 1:1.6 to 1:3.5, more preferably 1:1.65 to 1:3. Within this range, proper fluidity may be secured, and thus processability may be excellent. In addition, no bulge or crack occurs in a plating film after thermal cycle evaluation, indicating that thermal cycle properties are excellent and plating properties are improved. When the weight ratio exceeds the above range, plating adhesion and thermal cycle properties may deteriorate. When the weight ratio is less than the above range, fluidity, impact resistance, and thermal cycle properties may deteriorate.

For example, the base resin may be included in an amount of 17 to 49 % by weight, preferably 20 to 40 % by weight, based on 100 % by weight of the thermoplastic resin. Within this range, mechanical properties, processability, and plating adhesion may be excellent. In particular, thermal cycle properties may be remarkably excellent.

When the content of the base resin is less than the above range, mechanical properties, such as impact strength, plating adhesion, and thermal cycle properties may be significantly degraded. When the content of the base resin exceeds the above range, processability and thermal cycle properties may be degraded.

For example, the aromatic vinyl compound-vinyl cyanide compound copolymer (B) of the present invention may have a weight average molecular weight of 50,000 to 200,000 g/mol, preferably 60,000 to 180,000 g/mol, more preferably 70,000 to 150,000 g/mol. Within this range, proper fluidity may be secured, and thus processability may be excellent. In addition, mechanical properties, such as impact resistance, and plating adhesion may be excellent.

In the present invention, unless otherwise defined, when weight average molecular weight is measured, 1 g of a copolymer is dissolved at 40 °C in tetrahydrofuran (THF), and then weight average molecular weight is measured using the obtained solution and a gel chromatography (GPC) column filled with porous silica. In this case, polystyrene (PS) is used as a standard material for calibration.

For example, the aromatic vinyl compound-vinyl cyanide compound copolymer (B) may be included in an amount of 51 to 83 % by weight, preferably 60 to 83 % by weight, more preferably 60 to 75 % by weight, based on 100 % by weight of the thermoplastic resin. Within this range, proper fluidity may be secured, and thus processability may be excellent. In addition, when an etching process using a chromium-free etchant is performed, a sufficient number of irregularities may be formed on the surface of a resin, thereby improving plating adhesion and appearance.

For example, the aromatic vinyl compound-vinyl cyanide compound copolymer (B) may include 20 to 40 % by weight of a vinyl cyanide compound and 60 to 80 % by weight of an aromatic vinyl compound. Within this range, overall physical property balance, such as mechanical properties, plating adhesion, and thermal cycle properties may be excellent.

As another example, the aromatic vinyl compound-vinyl cyanide compound copolymer (B) may include 23 to 37 % by weight of a vinyl cyanide compound and 63 to 77 % by weight of an aromatic vinyl compound. Within this range, when a plating process using a chromium-free etchant with low toxicity is performed, plating adhesion, thermal cycle properties, and appearance may be excellent.

For example, the aromatic vinyl compound-vinyl cyanide compound copolymer (B) may be prepared through solution polymerization or bulk polymerization. In this case, heat resistance and fluidity may be excellent.

Solution polymerization methods and bulk polymerization methods commonly used in the art to which the present invention pertains may be used as the solution polymerization method and the bulk polymerization method of the present invention, respectively, without particular limitation.

For example, the thermoplastic resin composition of the present invention may be used as a thermoplastic resin composition for chromium-free etchants. In this case, since the thermoplastic resin composition does not contain toxic chromic acid, the thermoplastic resin composition may be eco-friendly. In addition, when an etching process is performed, a sufficient number of irregularities may be formed on the surface of a resin, thereby improving plating adhesion. In addition, after thermal cycle evaluation, no bulge or crack occurs in a plating film, indicating that appearance and mechanical properties are excellent.

For example, the chromium-free etchant may be a solution including permanganate and an organic acid or an inorganic acid. Preferably, the chromium-free etchant is a chromium-free etchant including one or more of potassium permanganate (KMnO₄), phosphoric acid (H₃PO₄), and sulfuric acid (H₂SO₄). In this case, a sufficient number of irregularities may be formed on the surface of a resin, thereby increasing plating adhesion between the resin and a plating layer and imparting excellent appearance.

For example, the chromium-free etchant may be an etchant including 20 to 30 g/L of permanganate and 550 to 650 mL/L of phosphoric acid. Within this range, even irregularities may be formed. Thereby, plating adhesion may be improved, and a molded article having excellent appearance may be manufactured.

For example, the thermoplastic resin composition may further include additives, such as heat stabilizers, antioxidants, impact modifiers, light stabilizers, plasticizers, lubricants, and antistatic agents. In this case, the function of the additives may be realized without degrading the intrinsic physical properties of the thermoplastic resin composition of the present invention.

For example, the additives may be included in an amount of 0.1 to 5 parts by weight or 1 to 5 parts by weight based on 100 parts by weight in total of the base resin and the aromatic vinyl compound-vinyl cyanide compound copolymer.

When melt index is measured according to ASTM D1238, the thermoplastic resin composition of the present invention has a melt index (220 °C, 10 kg) of 14 to 36 g/10 min, preferably 15 to 33 g/10 min. Within this range, due to the high fluidity, various shapes may be realized through injection molding.

For example, when Izod impact strength is measured according to ASTM D256, the thermoplastic resin composition of the present invention may have an Izod impact strength (6.4 mm, 23 °C) of 147 N cm/cm² (15 kgf·cm/cm²) or more, 147 to 353 N cm/cm² (15 to 36 kgf·cm/cm²), or 147 to 304 N cm/cm² (15 to 31 kgf·cm/cm²). Within this range, impact resistance may be excellent.

For example, the thermoplastic resin composition of the present invention may have a plating adhesion of 9 N/cm or more, 9 to 25 N/cm, or 9 to 15 N/cm. Within this range, appearance may be excellent after plating.

Hereinafter, a method of manufacturing the thermoplastic resin composition of the present invention will be described.

For example, the method of preparing a thermoplastic resin composition of the present invention may include a step of kneading and extruding 17 to 49 % by weight of a base resin including, in a weight ratio of 1:1.5 to 1:4, an alkyl acrylate-aromatic vinyl compound-vinyl cyanide compound graft copolymer (A-1) containing alkyl acrylate rubber having an average particle diameter of 0.05 µm to 0.2 µm and an alkyl acrylate-aromatic vinyl compound-vinyl cyanide compound graft copolymer (A-2) containing alkyl acrylate rubber having an average particle diameter of more than 0.2 µm and less than or equal to 0.7 pm; and 51 to 83 % by weight of an aromatic vinyl compound-vinyl cyanide compound copolymer (B) having a weight average molecular weight of 50,000 to 200,000 g/mol. In this case, proper fluidity may be secured, and thus processability may be excellent. In addition, plating adhesion, thermal cycle properties, and appearance may be excellent in a plating process using a chromium-free etchant with low toxicity without deterioration in mechanical properties.

For example, in the kneading step, the alkyl acrylate-aromatic vinyl compound-vinyl cyanide compound graft copolymer (A-1), the alkyl acrylate-aromatic vinyl compound-vinyl cyanide compound graft copolymer (A-2), and the aromatic vinyl compound-vinyl cyanide compound copolymer (B) may be added batchwise.

For example, the kneading and extruding step may be performed using a single-screw extruder, a twin-screw extruder, or a Banbury mixer, preferably a twin-screw extruder. In this case, the composition may be uniformly dispersed, thereby improving compatibility.

For example, the kneading and extruding step may be performed under the condition that the rate of rotation of a screw is 200 to 300 rpm or 250 to 300 rpm and temperature is 200 to 300 °C, 200 to 270 °C, or 220 to 260 °C. In this case, throughput per unit time may be appropriate, thereby improving process efficiency. In addition, excessive cutting may be prevented.

Hereinafter, a molded article including the thermoplastic resin composition of the present invention and a method of manufacturing the molded article will be described. Description of the molded article of the present invention and the method of manufacturing the same includes the description of the above-described thermoplastic resin composition as in the description of the method of preparing the thermoplastic resin composition of the present invention.

For example, the molded article of the present invention may include the thermoplastic resin composition of the present invention, and the mechanical properties, plating properties, and thermal cycle properties of the molded article may be excellent.

For example, the molded article may include a base layer and a plating layer. The base layer may be formed by molding the thermoplastic resin composition of the present invention, and the plating layer is preferably formed by molding one or more selected from the group consisting of copper, nickel, and chromium. In this case, adhesion between the base layer and the plating layer may be increased, and mechanical properties and appearance may be excellent.

For example, the molded article may be a molded article manufactured using a chromium-free etchant. In this case, since the molded article does not contain toxic chromic acid, the molded article may be eco-friendly. In addition, after thermal cycle evaluation, no bulge or crack occurs in a plating film, indicating that appearance, mechanical properties, and plating properties are excellent.

For example, the chromium-free etchant is preferably a solution including permanganate and an organic acid or an inorganic acid. More preferably, the chromium-free etchant is a chromium-free etchant including potassium permanganate (KMnO₄) and phosphoric acid (H₃PO₄). In this case, a sufficient number of irregularities may be formed on the surface of a resin, thereby increasing plating adhesion between the resin and a plating layer and imparting excellent appearance.

For example, the molded article may be a faucet, an automotive interior material, or an automotive exterior material. In this case, plating properties, mechanical properties, and thermal cycle properties may be excellent, and thus the molded article may be used for a long time without being easily damaged by direct contact.

For example, the faucet may be a shower head or a water pipe.

For example, the method of manufacturing a molded article according to the present invention may include a step of obtaining an injection-molded article by injection-molding the thermoplastic resin composition of the present invention; a step of etching the injection-molded article using a chromium-free etchant; and a step of plating the etched injection-molded article. In this case, a molded article having excellent plating adhesion without deterioration in mechanical properties and thermal cycle properties may be obtained.

The etching step is a process of melting a rubber portion in the thermoplastic resin to impart irregularities to the surface of the thermoplastic resin. Through this process, holes formed by melting the rubber portion act as anchor sites that are necessary for physical bonding with a plating film. Accordingly, by performing the etching process, plating adhesion may be increased, and polarity may be imparted on the surface of the thermoplastic resin to suppress occurrence of non-plating in the subsequent plating process.

For example, in the etching step, etching time may be 2 to 15 minutes or 3 to 10 minutes, and etching temperature may be 60 to 80 °C or 65 to 75 °C. Within this range, a molded article having excellent plating adhesion and thermal cycle properties may be manufactured while reducing process costs.

Description of the chromium-free etchant includes the description of the chromium-free etchant of the above-described thermoplastic resin composition of the present invention.

As a preferred example, the chromium-free etchant may be a chromium-free etchant including permanganate and phosphoric acid (H₃PO₄).

For example, the method of manufacturing the molded article may include, before the etching step, a degreasing step of removing oil from the injection-molded article.

For example, the degreasing step may be a step of removing oil by treating the injection-molded article with a surfactant, and surfactants commonly used in a degreasing process in the art to which the present invention pertains may be used without particular limitation.

For example, the degreasing step may be performed at 40 to 60 °C or 50 to 60 °C for 1 to 15 minutes or 3 to 8 minutes. Within this range, degreasing efficiency may be excellent.

For example, the plating step may include a plating pre-treatment step including one or more of a catalysis step and an activation step and a plating treatment step including one or more of a chemical plating step and an electroplating step.

For example, the catalysis step may be a step of adsorbing a metal catalyst into the anchor holes of a metal. In this case, metal catalysts commonly used when plating pre-treatment is performed in the art to which the present invention pertains may be used without particular limitation. Preferably, the metal catalyst of the present invention is a palladium-tin catalyst. In this case, palladium is adsorbed in anchor holes.

For example, the catalysis step may be performed at 20 to 40 °C for 1 to 8 minutes, preferably at 25 to 35 °C for 1 to 5 minutes. Within this range, adsorption efficiency to anchor holes formed in a metal may be improved.

For example, the activation step may be a step of performing activation by treating with an aqueous solution of sulfuric acid. In this case, a metal adsorbed into anchor holes may be activated by removing metals other than the metal to be adsorbed into the anchor holes.

For example, the activation step may be performed at 45 to 65 °C for 1 to 10 minutes, preferably at 50 to 60 °C for 1 to 5 minutes. Within this range, activation effect may be significant.

For example, the chemical plating may be electroless plating using a metal salt, and the metal salt is preferably nickel sulfate.

Preferably, the chemical plating is performed at 20 to 40 °C for 1 to 20 minutes, more preferably at 25 to 35 °C for 1 to 10 minutes. Within this range, electroless plating properties may be excellent.

For example, the electroplating may be at least one selected from the group consisting of copper electroplating, nickel electroplating, and chromium electroplating.

Copper salts commonly used in copper electroplating in the art to which the present invention pertains may be used without particular limitation. Preferably, electroplating using copper sulfate is performed.

For example, the copper electroplating may be performed at 15 to 35 °C for 20 to 60 minutes at 2 to 4 A/dm², preferably at 20 to 30 °C for 30 to 40 minutes at 2.5 to 3.5 A/dm².

Nickel salts commonly used in nickel electroplating in the art to which the present invention pertains may be used without particular limitation. Preferably, nickel sulfate is used.

For example, the nickel electroplating may be performed at 50 to 60 °C for 10 to 30 minutes at 2 to 4 A/dm², preferably at 55 to 60 °C for 10 to 20 minutes at 2.5 to 3.5 A/dm².

Chromium-based compounds commonly used in chromium electroplating in the art to which the present invention pertains may be used without particular limitation. Preferably, chromium anhydride is used.

Preferably, the chromium electroplating is performed at 45 to 65 °C for 1 to 15 minutes at 10 to 20 A/dm², more preferably at 50 to 60 °C for 1 to 5 minutes at 13 to 18 A/dm².

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

Materials used in Examples and Comparative Examples are as follows.
(A-1) A graft ASA resin (SA130, LG Chemical Co.) containing acrylate rubber having an average particle diameter of 100 nm
(A-2) A graft ASA resin (SA928, LG Chemical Co.) containing acrylate rubber having an average particle diameter of 300 nm
(B) A SAN resin (95RF, LG Chemical Co.) containing 30 % by weight of a vinyl cyanide compound and having a weight average molecular weight of 80,000 g/mol
(C) A graft ABS resin (DP270E, LG Chemical Co.)

### Examples 1 to 4 and Comparative Examples 1 to 7

Each component was added to a twin-screw extruder according to the composition and contents shown in Table 1 below and melted and kneaded at 230 °C to obtain a resin composition in the form of a pellet. The obtained resin composition was subjected to injection molding to prepare specimens for measuring physical properties. In this case, the specimens were formed into a square shape with a size of 100 mm × 100 mm × 3 mm or a cap shape with a size of 150 mm × 80 mm × 3 mm.

A plating film having a uniform thickness of 30 µm or more was formed on the prepared specimens by the following plating method.

First, the specimens were treated with a surfactant at 55 °C for 5 minutes to remove oil and incubated in a chromium-free etchant containing 25 g/L of KMnO₄ and 600 ml/L of phosphoric acid at 68 °C for 10 minutes to oxidize the specimens. Then, the specimens were incubated in the presence of a palladium-tin catalyst at 30 °C for 2 minutes to adsorb palladium in the anchor holes of the specimens. An activation step was conducted at 55 °C for 2 minutes to remove tin using an aqueous solution of sulfuric acid, and electroless plating was performed at 30 °C for 5 minutes using nickel sulfate. After electroless plating, electroplating was performed using copper, nickel, and chromium. In this case, copper electroplating using copper sulfate was conducted at 25 °C for 35 minutes at 3 A/dm², and chromium electroplating using a chromic anhydride solution was conducted at 55 °C for 3 minutes at 15 A/dm².

**[Table 1]**

| | Examples | | | | Comparative Examples | | | | | | |
|---|---|---|---|---|---|---|---|---|---|---|---|
| | 1 | 2 | 3 | 4 | 1 | 2 | 3 | 4 | 5 | 6 | 7 |
| (A-1) | 5 | 10 | 10 | 15 | 30 | - | - | 3 | 20 | 20 | 5 |
| (A-2) | 15 | 20 | 30 | 25 | - | 30 | - | 10 | 40 | 10 | 25 |
| (B) | 80 | 70 | 60 | 60 | 70 | 70 | 70 | 87 | 40 | 70 | 70 |
| (C) | - | - | - | - | - | - | 30 | - | - | - | - |

(The content of each component in Table 1 is given in % by weight based on the total weight of (A-1), (A-2), (B), and (C))

### [Test Examples]

The properties of specimens prepared according to Examples 1 to 4 and Comparative Examples 1 to 7 were measured by the following methods, and results are shown in Table 2.
* Melt index (g/10 min): The melt indexes of the prepared specimens were measured at 220 °C and 10 kg according to ASTM D1238.
* Impact strength (Notched Izod Impact Strength, kgfcm/cm²): The impact strength of the specimens was measured according to ASTM D256 using specimens having a thickness of 6.4 mm.
* Evaluation of plating adhesion: A 10 mm-wide scratch was applied to the front face of a plated square specimen (size: 100 mm × 100 mm × 3 mm), and the degree of plating adhesion was measured while peeling the specimen by a distance of 80 mm in the vertical direction using a push-pull gauge. The average of the measured values was calculated.
* Thermal cycle properties: Processes ① to ⑤ were performed on cap-shaped specimens in a chamber, and then the appearance of a plating film was observed with the naked eye. At this time, when no cracks and no plating bulges occurred, it was indicated by o. When cracks and plating bulges occurred on any portion of the specimen, it was indicated by X.
   ① The temperature in the chamber is maintained at - 40 °C for 60 minutes.
   20 The temperature in the chamber is raised to 90 °C within 1 minute.
   ③ The temperature in the chamber is maintained at 90 °C for 60 minutes.
   ④ The temperature in the chamber is cooled to - 40 °C within 1 minute.
   ⑤ Processes ① to ④ are repeated 8 times.
* Appearance evaluation (Presence or absence of non-plated regions): The appearance of a 150 mm × 80 mm × 3 mm cap-shaped specimen was visually observed. When there was no non-plated region, it was evaluated as "No abnormality". When there were non-plated regions, it was evaluated as "Non-plating".

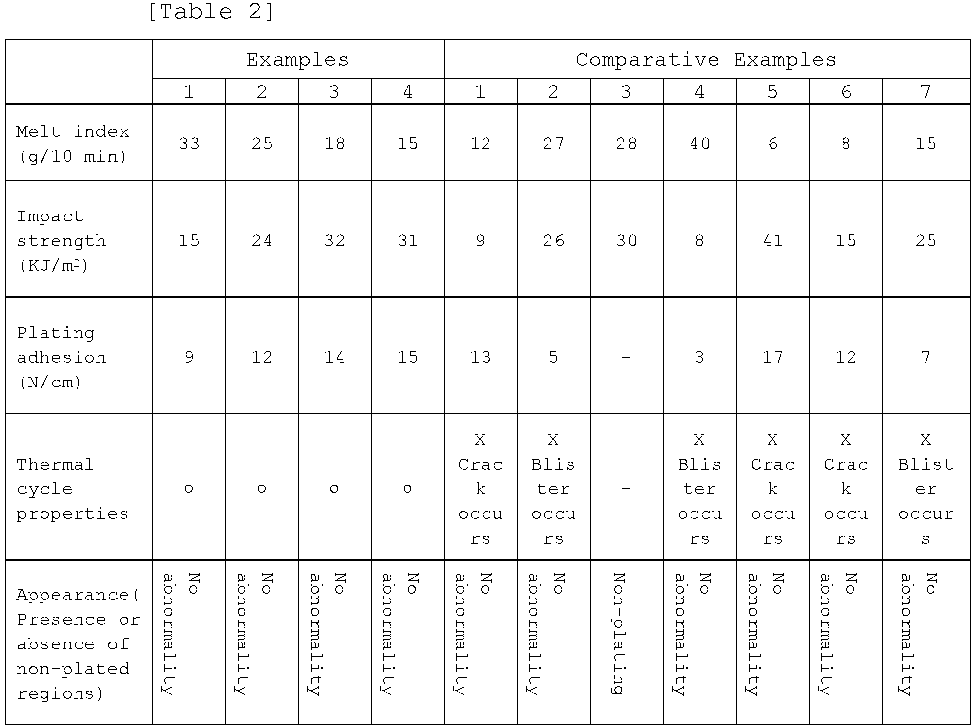

As shown in Table 2, in the case of Examples 1 to 4 of the present invention, it can be confirmed that, by including two types of ASA resins each containing rubber particles having different average particle diameters and a SAN resin having a specific weight average molecular weight in a specific ratio, mechanical properties, such as impact strength, are improved, processability is excellent due to proper fluidity, and plating adhesion, thermal cycle properties, and appearance are improved. In addition, it can be confirmed that plating adhesion and thermal cycle properties are significantly improved without deterioration in mechanical properties and fluidity in a plating process using a chromium-free etchant with low toxicity.

On the other hand, in the case of Comparative Example 1 including one type of ASA resin instead of two types of ASA resins each containing rubber particles having different average particle diameters, melt index and impact strength are degraded. In addition, after thermal cycle evaluation, cracks occur in a plating film, indicating that thermal cycle properties are poor. In addition, in the case of Comparative Example 2 including one type of ASA resin, plating adhesion is significantly reduced. In addition, after thermal cycle evaluation, bulges occur in a plating film.

In addition, in the case of Comparative Example 3 only including an ABS resin, non-plating occurs.

In addition, in the case of Comparative Example 4 in which the total content of two types of ASA resins each containing rubber particles having different average particle diameters is less than the content range according to the present invention, mechanical properties, such as impact strength, are degraded, and plating adhesion is significantly degraded. In addition, after thermal cycle evaluation, bulges occur in a plating film. These results indicate that the plating properties of Comparative Example 4 are poor. In the case of Comparative Example 5 exceeding the content range according to the present invention, melt index is not proper, thereby reducing processability. In addition, after thermal cycle evaluation, cracks occur in a plating film, indicating that thermal cycle properties are poor.

In addition, in the case of Comparative Example 6 in which the weight ratio between an ASA resin containing alkyl acrylate rubber having an average particle diameter of 0.05 to 0.2 µm and an ASA resin containing alkyl acrylate rubber having an average particle diameter of more than 0.2 µm and less than or equal to 0.7 µm is less than the range of the present invention, melt index is not proper. In addition, after thermal cycle evaluation, cracks occur. On the other hand, in the case of Comparative Example 7 in which the weight ratio exceeds the range of the present invention, plating adhesion is reduced, and bulges occur after thermal cycle evaluation, indicating that thermal cycle properties are poor.

## Claims

1. A thermoplastic resin composition, comprising:
17 to 49 % by weight of a base resin comprising, in a weight ratio of 1:1.5 to 1:4, an alkyl acrylate-aromatic vinyl compound-vinyl cyanide compound graft copolymer (A-1) containing alkyl acrylate rubber having an average particle diameter of 0.05 µm to 0.2 µm as determined by the method defined in the description and an alkyl acrylate-aromatic vinyl compound-vinyl cyanide compound graft copolymer (A-2) containing alkyl acrylate rubber having an average particle diameter of more than 0.2 µm and less than or equal to 0.7 µm as determined by the method defined in the description;
and 51 to 83 % by weight of an aromatic vinyl compound-vinyl cyanide compound copolymer (B) having a weight average molecular weight of 50,000 to 200,000 g/mol as determined by the method defined in the description, wherein the thermoplastic resin composition has a melt index (220 °C, 10 kg) of 14 to 36 g/10 min.

2. The thermoplastic resin composition according to claim 1, wherein the alkyl acrylate rubber of each of the alkyl acrylate-aromatic vinyl compound-vinyl cyanide compound graft copolymer (A-1) and the alkyl acrylate-aromatic vinyl compound-vinyl cyanide compound graft copolymer (A-2) independently has an alkyl group having 1 to 10 carbon atoms.

3. The thermoplastic resin composition according to claim 1, wherein the alkyl acrylate-aromatic vinyl compound-vinyl cyanide compound graft copolymer (A-1) and the alkyl acrylate-aromatic vinyl compound-vinyl cyanide compound graft copolymer (A-2) each independently comprise 20 to 80 % by weight of alkyl acrylate rubber, 10 to 70 % by weight of an aromatic vinyl compound, and 5 to 50 % by weight of a vinyl cyanide compound.

4. The thermoplastic resin composition according to claim 1, wherein the aromatic vinyl compound-vinyl cyanide compound copolymer (B) comprises 20 to 40 % by weight of a vinyl cyanide compound and 60 to 80 % by weight of an aromatic vinyl compound.

5. The thermoplastic resin composition according to claim 1, wherein the thermoplastic resin composition has an impact strength of 147 N·cm/cm² (15 kgf ·cm/cm²) or more as determined by the method defined in the description.

6. The thermoplastic resin composition according to claim 1, wherein the thermoplastic resin composition has a plating adhesion of 9 N/cm or more as determined by the method defined in the description.

7. Use of the thermoplastic resin composition according to any of the preceding claims in chromium-free etching.

8. A method of preparing a thermoplastic resin composition, the method comprising kneading and extruding 17 to 49 % by weight of a base resin comprising, in a weight ratio of 1:1.5 to 1:4, an alkyl acrylate-aromatic vinyl compound-vinyl cyanide compound graft copolymer (A-1) containing alkyl acrylate rubber having an average particle diameter of 0.05 µm to 0.2 µm as determined by the method defined in the description and an alkyl acrylate-aromatic vinyl compound-vinyl cyanide compound graft copolymer (A-2) containing alkyl acrylate rubber having an average particle diameter of more than 0.2 µm and less than or equal to 0.7 µm as determined by the method defined in the description; and 51 to 83 % by weight of an aromatic vinyl compound-vinyl cyanide compound copolymer (B) having a weight average molecular weight of 50,000 to 200,000 g/mol as determined by the method defined in the description and wherein the thermoplastic resin composition has a melt index (220 °C, 10 kg) of 14 to 36 g/10 min.

9. A molded article, comprising the thermoplastic resin composition according to any one of clams 1 to 6.

10. A method of manufacturing a molded article, the method comprising:
obtaining an injection-molded article by injection-molding the thermoplastic resin composition according to any one of claims 1 to 8;
etching the injection-molded article using a chromium-free etchant; and
plating the etched injection-molded article.

## Patentansprüche

1. Thermoplastische Harzzusammensetzung, umfassend:
17 bis 49 Gew.-% eines Basisharzes, umfassend, in einem Gewichtsverhältnis von 1:1,5 bis 1:4, ein Alkylacrylat-aromatische Vinylverbindung-Vinylcyanidverbindung-Pfropfcopolymer (A-1), enthaltend Alkylacrylatkautschuk mit einem durchschnittlichen Teilchendurchmesser von 0,05 µm bis 0,2 µm, wie durch das in der Beschreibung definierte Verfahren bestimmt, und ein Alkylacrylat-aromatische Vinylverbindung-Vinylcyanidverbindung-Pfropfcopolymer (A-2), enthaltend Alkylacrylatkautschuk mit einem durchschnittlichen Teilchendurchmesser von mehr als 0,2 µm und weniger als oder gleich 0,7 µm, wie durch das in der Beschreibung definierte Verfahren bestimmt; und
51 bis 83 Gew.-% eines aromatische Vinylverbindung-Vinylcyanidverbindung-Copolymers (B) mit einem gewichtsgemittelten Molekulargewicht von 50.000 bis 200.000 g/mol, wie durch das in der Beschreibung definierte Verfahren bestimmt, wobei die thermoplastische Harzzusammensetzung einen Schmelzindex (220 °C, 10 kg) von 14 bis 36 g/ 10 min aufweist.

2. Thermoplastische Harzzusammensetzung nach Anspruch 1, bei der der Alkylacrylatkautschuk von jedem des Alkylacrylat-aromatische Vinylverbindung-Vinylcyanidverbindung-Pfropfcopolymers (A-1) und des Alkylacrylat-aromatische Vinylverbindung-Vinylcyanidverbindung-Pfropfcopolymers (A-2) unabhängig eine Alkylgruppe mit 1 bis 10 Kohlenstoffatomen aufweist.

3. Thermoplastische Harzzusammensetzung nach Anspruch 1, bei der das Alkylacrylat-aromatische Vinylverbindung-Vinylcyanidverbindung-Pfropfcopolymer (A-1) und das Alkylacrylat-aromatische Vinylverbindung-Vinylcyanidverbindung-Pfropfcopolymer (A-2) jeweils unabhängig 20 bis 80 Gew.-% Alkylacrylatkautschuk, 10 bis 70 Gew.-% einer aromatischen Vinylverbindung und 5 bis 50 Gew.-% einer Vinylcyanidverbindung umfassen.

4. Thermoplastische Harzzusammensetzung nach Anspruch 1, bei der das aromatische Vinylverbindung-Vinylcyanidverbindung-Copolymer (B) 20 bis 40 Gew.-% einer Vinylcyanidverbindung und 60 bis 80 Gew.-% einer aromatischen Vinylverbindung umfasst.

5. Thermoplastische Harzzusammensetzung nach Anspruch 1, bei der die thermoplastische Harzzusammensetzung eine Schlagzähigkeit von 147 N·cm/cm² (15 kgf·cm/cm²) oder mehr aufweist, wie durch das in der Beschreibung definierte Verfahren bestimmt.

6. Thermoplastische Harzzusammensetzung nach Anspruch 1, bei der die thermoplastische Harzzusammensetzung eine Plattierungshaftung von 9 N/cm oder mehr aufweist, wie durch das in der Beschreibung definierte Verfahren bestimmt.

7. Verwendung der thermoplastischen Harzzusammensetzung nach einem der vorhergehenden Ansprüche beim chromfreien Ätzen.

8. Verfahren zur Herstellung einer thermoplastischen Harzzusammensetzung, wobei das Verfahren Kneten und Extrudieren von 17 bis 49 Gew.-% eines Basisharzes, umfassend, in einem Gewichtsverhältnis von 1:1,5 bis 1:4, ein Alkylacrylat-aromatische Vinylverbindung-Vinylcyanidverbindung-Pfropfcopolymer (A-1), enthaltend Alkylacrylatkautschuk mit einem durchschnittlichen Teilchendurchmesser von 0,05 µm bis 0,2 µm, wie durch das in der Beschreibung definierte Verfahren bestimmt, und ein Alkylacrylat-aromatische Vinylverbindung-Vinylcyanidverbindung-Pfropfcopolymer (A-2), enthaltend Alkylacrylatkautschuk mit einem durchschnittlichen Teilchendurchmesser von mehr als 0,2 µm und weniger als oder gleich 0,7 µm, wie durch das in der Beschreibung definierte Verfahren bestimmt; und 51 bis 83 Gew.-% eines aromatische Vinylverbindung-Vinylcyanidverbindung-Copolymers (B) mit einem gewichtsgemittelten Molekulargewicht von 50.000 bis 200.000 g/mol, wie durch das in der Beschreibung definierte Verfahren bestimmt, umfasst, wobei die thermoplastische Harzzusammensetzung einen Schmelzindex von 36°C bis 14°C von 10 bis 10 kg/ 10 min aufweist.

9. Formkörper, umfassend die thermoplastische Harzzusammensetzung nach einem der Ansprüche 1 bis 6.

10. Verfahren zur Herstellung eines Formkörpers, wobei das Verfahren umfasst:
Erhalten eines spritzgegossenen Gegenstands durch Spritzgießen der thermoplastischen Harzzusammensetzung nach einem der Ansprüche 1 bis 8;
Ätzen des spritzgegossenen Gegenstands unter Verwendung eines chromfreien Ätzmittels; und
Plattieren des geätzten spritzgegossenen Gegenstands.

## Revendications

1. Composition de résine thermoplastique, comprenant :
17 à 49 % en poids d'une résine de base comprenant, dans un rapport en poids de 1:1,5 à 1:4, un copolymère greffé de composé d'acrylate d'alkyle-composé de vinyle aromatique-composé de cyanure de vinyle (A-1) contenant du caoutchouc d'acrylate d'alkyle ayant un diamètre de particule moyen de 0,05 µm à 0,2 µm, déterminé par le procédé défini dans la description, et un copolymère greffé de composé d'acrylate d'alkyle-composé de vinyle aromatique-composé de cyanure de vinyle (A-2) contenant du caoutchouc d'acrylate d'alkyle ayant un diamètre de particule moyen supérieur à 0,2 µm et égal ou inférieur à 0,7 µm, déterminé par le procédé défini dans la description ; et
51 à 83 % en poids d'un copolymère de composé de vinyle aromatique-composé de cyanure de vinyle (B) ayant un poids moléculaire moyen en poids de 50 000 à 200 000 g/mol, déterminé par le procédé défini dans la description,
dans laquelle la composition de résine thermoplastique a un indice de fluidité (220 °C, 10 kg) de 14 à 36 g/10 min.

2. Composition de résine thermoplastique selon la revendication 1, dans laquelle le caoutchouc d'acrylate d'alkyle de chacun du copolymère greffé de composé d'acrylate d'alkyle-composé de vinyle aromatique-composé de cyanure de vinyle (A-1) et du copolymère greffé de composé d'acrylate d'alkyle-composé de vinyle aromatique-composé de cyanure de vinyle (A-2) indépendamment a un groupe alkyle ayant 1 à 10 atomes de carbone.

3. Composition de résine thermoplastique selon la revendication 1, dans laquelle le copolymère greffé de composé d'acrylate d'alkyle-composé de vinyle aromatique-composé de cyanure de vinyle (A-1) et le copolymère greffé de composé d'acrylate d'alkyle-composé de vinyle aromatique-composé de cyanure de vinyle (A-2) comprennent chacun indépendamment 20 à 80 % en poids de caoutchouc d'acrylate d'alkyle, 10 à 70 % en poids d'un composé de vinyle aromatique et 5 à 50 % en poids d'un composé de cyanure de vinyle.

4. Composition de résine thermoplastique selon la revendication 1, dans laquelle le copolymère de composé de vinyle aromatique-composé de cyanure de vinyle (B) comprend 20 à 40 % en poids d'un composé de cyanure de vinyle et 60 à 80 % en poids d'un composé de vinyle aromatique.

5. Composition de résine thermoplastique selon la revendication 1, dans laquelle la composition de résine thermoplastique a une résistance au choc égale ou supérieure à 147 N·cm/cm² (15 kgf·cm/cm²), déterminée par le procédé défini dans la description.

6. Composition de résine thermoplastique selon la revendication 1, dans laquelle la composition de résine thermoplastique a une adhérence de placage égale ou supérieure à 9 N/cm, déterminée par le procédé défini dans la description.

7. Utilisation de la composition de résine thermoplastique selon l'une quelconque des revendications précédentes en gravure sans chrome.

8. Procédé de préparation d'une composition de résine thermoplastique, le procédé consistant à malaxer et extruder 17 à 49 % en poids d'une résine de base comprenant, dans un rapport en poids de 1:1,5 à 1:4, un copolymère greffé de composé d'acrylate d'alkyle-composé de vinyle aromatique-composé de cyanure de vinyle (A-1) contenant du caoutchouc d'acrylate d'alkyle ayant un diamètre de particule moyen de 0,05 µm à 0,2 µm, déterminé par le procédé défini dans la description, et un copolymère greffé de composé d'acrylate d'alkyle-composé de vinyle aromatique-composé de cyanure de vinyle (A-2) contenant du caoutchouc d'acrylate d'alkyle ayant un diamètre de particule moyen supérieur à 0,2 µm et égal ou inférieur à 0,7 µm, déterminé par le procédé défini dans la description ; et 51 à 83 % en poids d'un copolymère de composé de vinyle aromatique-composé de cyanure de vinyle (B) ayant un poids moléculaire moyen en poids de 50 000 à 200 000 g/mol, déterminé par le procédé défini dans la description et dans lequel la composition de résine thermoplastique a un indice de fluidité (220 °C, 10 kg) de 14 à 36 g/10 min.

9. Article moulé, comprenant la composition de résine thermoplastique selon l'une quelconque des revendications 1 à 6.

10. Procédé de fabrication d'un article moulé, le procédé consistant à:
obtenir un article moulé par injection par moulage par injection de la composition de résine thermoplastique selon l'une quelconque des revendications 1 à 8 ;
graver l'article moulé par injection en utilisant un agent de gravure sans chrome ; et
plaquer l'article moulé gravé moulé par injection.
